# EUROPÄISCHE PATENTSCHRIFT

(11) **EP 1 103 494 B1**
(45) Veröffentlichungstag und Bekanntmachung des Hinweises auf die Patenterteilung: **09.07.2003**
(21) Anmeldenummer: 00120998.0
(22) Anmeldetag: 27.09.2000
(51) Int. Cl.: B65G 1/04, B66F 9/12

(54) **Lagersystem für Paletten**
Storage system for paletts
Système de stockage pour palettes

(30) Priorität: 25.11.1999 DE 19956619
(43) Veröffentlichungstag der Anmeldung: 30.05.2001
(73) Patentinhaber: Jungheinrich Aktiengesellschaft, 22047 Hamburg (DE)
(72) Erfinder: Brandes, Rainer, Dipl.Ing., 25486 Alveslohe (DE)
(74) Vertreter: Patentanwälte Hauck, Graalfs, Wehnert, Döring, Siemons, Schildberg

(56) Entgegenhaltungen:
- EP-A- 0 071 883
- EP-A- 0 310 714
- DE-A- 2 930 569
- GB-A- 1 346 027
- US-A- 3 848 755
- US-A- 3 880 299

## Beschreibung

Die Erfindung bezieht sich auf ein Lagersystem für Paletten nach dem Oberbegriff des Patentanspruchs 1.

Es ist allgemein bekannt, beim Ein- und Auslagern von Paletten aus Regelsystemen Satellitenfahrzeuge zu verwenden, die auf Schienen innerhalb der Kanäle des Regalsystems laufen und Paletten vom Kanalanfang an einem gewünschten Ort im Kanal abzusetzen bzw. aus dem Kanal zum Kanalanfang zu fördern, wo sie dann mit Hilfe geeigneter Stapelfahrzeuge abgenommen werden können. Es ist bekannt, derartige Satellitenfahrzeuge als Flachwagen auszubilden, die in U-förmigen Schienen unterhalb der Kanäle laufen und deren Plattform höhenverstellbar ist Der Aufbau derartiger Satellitenfahrzeuge ist relativ einfach. Sie haben jedoch den Nachteil, dass sie nicht umgesetzt werden können. Daher ist für jeden Kanal ein Satellitenfahrzeug erforderlich.

Aus EP 0 310 714 ist auch bekannt geworden, das Satellitenfahrzeug als Niederhubstapler auszubilden, der ebenfalls auf Laufschienen im Regal fährt und der mit einem Lasttragmittel des Stapelfahrzeugs verbindbar ist und mit dessen Hilfe die Last etwa vom Boden aufgenommen wird, damit sie in ein Regal eingestapelt wird. Das Stapelfahrzeug setzt den Satelliten am Anfang des Kanals ab und das Satellitenfahrzeug transportiert die Palette zu einem gewünschten Ort im Kanal. Vorteil eines derartigen Systems ist, dass das Satellitenfahrzeug vom Stapelfahrzeug in jeden beliebigen Kanal eingesetzt werden kann. Nachteilig ist hingegen, dass zwischen Satelliten und Stapler eine ständige Verbindung besteht in Form eines Kabels, das auf einer Kabelrolle im Stapler aufgewickelt ist und beim Einfahren eines Satelliten in einen Kanal abgerollt wird. Auf diese Weise ist der Einfahrtiefe eine Grenze gesetzt. Außerdem erfordert ein derartiges System ein Spezial-Stapelfahrzeug. Schließlich kann das Stapelfahrzeug auch immer nur mit einem Satelliten zusammenwirken. Ist beispielsweise erforderlich, die Batterie des Satellitenfahrzeugs aufzuladen, fällt das gesamte System für eine gewisse Zeit aus.

Der Erfindung liegt die Aufgabe zugrunde, ein Lagersystem für Paletten der zuletzt genannten Art dahingehend zu verbessern, dass der Wagen zum Ein- und Auslagern der Paletten unabhängig vom Stapelfahrzeug ist.

Diese Aufgabe wird durch die Merkmale des Patentanspruchs 1 gelöst.

Bei der Erfindung ist der Wagen (wenn von einem Wagen nachstehend die Rede ist, ist damit ein Satellitenfahrzeug der oben erwähnten Art gemeint) mit Kupplungsmitteln versehen, damit er mit dem Stapelfahrzeug lösbar verbunden werden kann. Das Stapelfahrzeug weist ein Gegenkupplungsteil auf, das dann an dem Gabelträger anzubringen ist, wenn das Stapelfahrzeug für die erfindungsgemäßen Zwecke verwendet werden soll. Eine Verriegelungsvorrichtung sorgt dafür, dass die Kupplung nicht ungewollt gelöst wird.

Bei der Erfindung ist der Wagen ein autonomes Fahrzeug und weist deshalb eine Batterie auf für den Antrieb, der vorzugsweise ein Elektromotor ist. Die Batterien sind vorzugsweise auswechselbar im Wagen angeordnet, so dass sie erforderlichenfalls durch frisch geladene ersetzt werden können. Es ist jedoch auch denkbar, den Wagen insgesamt zu einer Ladestation zu transportieren. In jedem Fall ist von Vorteil, wenn beim Beladen mit Batterien eine automatische Kontaktierung stattfindet, wie dies auch anzustreben wäre, wenn die Batterien in einer Ladestation abgesetzt werden. Das Gleiche könnte der Fall sein, wenn der gesamte Wagen in einer Ladestation positioniert wird.

Mit Hilfe der Batterie kann der Wagen völlig autonom betätigt werden. Er ist nicht mehr an ein spezielles Stapelfahrzeug gebunden. Daher kann das Stapelfahrzeug zum Beispiel mehrere Wagen gleichzeitig "bedienen". Ein weiterer Vorteil besteht darin, dass das Stapelfahrzeug ein herkömmliches Fahrzeug sein kann, das lediglich mit einem Kupplungsteil versehen wird, wenn es für erfindungsgemäße Zwecke verwendet werden soll. Dadurch ist der Gesamtaufwand für das erfindungsgemäße Transportsystem deutlich reduziert.

Für die autonome Betriebsweise weist der erfindungsgemäße Wagen eine Programmablaufsteuerung auf, mit der automatisch eine Einlagerung oder Auslagerung einer Palette in den bzw. aus dem Kanal vorgenommen wird. Die Ablaufsteuerung benötigt für ihren Betrieb einige Sensoren am Wagen, damit die Ablaufsteuerung weiß, in welcher Betriebsposition der Wagen sich befindet. So ist ein erster Sensor vorgesehen, der ein Signal abgibt, wenn der Wagen auf den Fahrschienen aufgesetzt wird oder aufgesetzt ist. Nur wenn feststeht, dass dies der Fall ist, darf die Verriegelung für die Kupplung zwischen Wagen und Gabel des Stapelfahrzeugs gelöst werden. Dieser Sensor initiiert daher die Ablaufsteuerung bzw. die Entriegelung der Kupplungseinrichtung. Es ist ein zweiter Sensor vorgesehen, der den Zustand der Kupplungseinrichtung überwacht. Erst wenn die Kupplungseinrichtung gelöst ist, kann der Wagen in Betrieb gesetzt werden.

Ein dritter Sensor am Wagen gibt ein Signal zum Start des Einlagerungs- bzw. Auslagerungsvorgangs ab je nachdem, ob sich eine Palette auf der Gabel des Wagens befindet. Befindet sich keine Palette auf der Gabel, bedeutet dies, dass der Wagen zu einer beladenen Palette im Kanal vorfahren soll, um diese aufzunehmen und zum Kanalanfang zu befördern. Befindet sich hingegen eine Palette auf dem Wagen, soll dieses im Kanal abgesetzt werden.

Im Bereich mindestens eines Radarms des Wagens ist ein weiterer Sensor angeordnet, der feststellt, wenn sich der Wagen einer Palette bzw. einem anderen Hindernis annähert. Dadurch ist es möglich, entweder eine Palette aufzunehmen, ohne gegen diese anzustoßen bzw. eine im Kanal abzusetzen in unmittelbarer Nachbarschaft zu einer bereits abgesetzten Palette. Befindet sich im Kanal keine Palette, ist vorzugsweise ein Hindernis im Kanal vorgesehen, das vom Sensor festgestellt wird, damit ein entsprechendes Stoppsignal auf den Antrieb gegeben wird.

Schließlich weist der Wagen Mittel auf, mit denen festgestellt wird, wie weit sich ein Fahrzeug vom Kanalanfang in den Kanal hinein bewegt hat. Nach einer Fahrt in den Kanal hinein muss der Wagen wieder in die Ausgangsposition am Anfang des Kanals zurückgefahren werden. Damit die Steuerung weiß, wie weit sie den Waren fahren muss, wird die in den Kanal hineingefahrene Strecke gespeichert. Die gleiche Strecke muss der Wagen dann zurückfahren, damit er am Kanalanfang wieder hält. Grundsätzlich ist aber auch denkbar, statt einer Wegesteuerung eine Initiatorsteuerung vorzusehen dergestalt, dass der Wagen bei einer Fahrt in Richtung Kanalende durch einen geeigneten Initiator erfasst wird, wodurch ein Stoppsignal für den Antrieb des Wagens erzeugt wird. Eine Wegemessung hat jedoch den Vorteil, dass stets bekannt ist, wie weit ein Wagen in den Kanal hineingefahren ist, wenn er einen entsprechenden Einlagerungs- oder Auslagerungsvorgang ausführt.

Nach einer Ausgestaltung der Erfindung ist ein fünfter Sensor für die Ablaufsteuerung vorgesehen, der den Zustand der Verriegelungseinrichtung der Kupplungseinrichtung überwacht. Solange die Verriegelungseinrichtung nicht entriegelt ist, kann die Kupplungseinrichtung nicht gelöst werden.

Bei Annäherung des Wagens an das Fahrtende ist es zweckmäßig, einen Schleichgangmodus vorzusehen. Daher ist nach einer Ausgestaltung der Erfindung ein sechster Sensor vorgesehen, der ein Signal abgibt, wenn die Gabel des Wagens eine vorgegebene Strecke in eine Palette eingefahren ist. Ein siebter Sensor kann vorgesehen werden, der ein Signal abgibt, wenn sich ein Radarm eine vorgegebene Strecke der Palette genähert hat. In beiden Fällen wird daher nach Signalerzeugung der Schleichgang eingeschaltet, damit heftige Stöße beim Stoppen des Wagens vermieden werden und die anzufahrende Position präziser erreicht wird.

Wie eingangs erwähnt, ist der Wagen mit einer Hubgabel versehen, mit der eine Palette von den Laufschienen abgehoben bzw. auf diese abgesetzt werden kann. Es ist nach einer Ausgestaltung der Erfindung zweckmäßig, diesen Hub ebenfalls von Sensoren zu erfassen. Es ist aber auch möglich, den Hub automatisch nach oben und unten zu begrenzen, wenn man davon ausgehen kann, dass es hydraulisch möglich ist, den Hubweg stets gleich zu halten.

Zur Wegstreckenmessung kann ein normales Drehzahlmessgerät vorgesehen werden oder auch ein Abstandsmessgerät, das mit einem Lasersystem arbeitet. Es kann auch zweckmäßig sein, beide Messvorrichtungen redundant vorzusehen, damit bei Ausfall eines Messgerätes das zweite noch wirksam ist. Funktionieren beide Geräte, kann mit Hilfe des einen das andere korrigiert werden, wenn Fehlerabweichungen vorliegen.

Bei der Erfindung ist der Wagen vollständig autonom, es ist jedoch zweckmäßig, eine Kommunikationsstrecke zwischen dem Fahrer bzw. dem Stapelfahrzeug und dem Wagen vorzusehen, beispielsweise um ein Notprogramm zu fahren, bestimmte Betriebszustände des Wagens anzeigen zu lassen, beispielsweise den Batterieladezustand. Außerdem ist es zweckmäßig, den Betriebsmodus des Wagens einschalten zu können. Befindet sich beispielsweise ein Wagen in Ruheposition am Kanalanfang und soll der Wagen eine Palette auslagern, dann ist es zweckmäßig, die Ablaufsteuerung vom Stapelfahrzeug bzw. vom Fahrer in Gang setzen zu können. Die weiteren Vorgänge laufen dann wie oben beschrieben ab.

Nachfolgend wird ein Ausführungsbeispiel der Erfindung anhand von Zeichnungen näher erläutert.
- Fig. 1: zeigt schematisch die Seitenansicht eines Hochregals mit einem Stapelfahrzeug und einem Wagen nach der Erfindung.
- Fig. 2: zeigt einen Schnitt durch eine Schiene des Regalsystems nach Fig. 1.
- Fig. 3: zeigt schematisch die Draufsicht auf den Wagen nach Fig. 1.
- Fig. 4: zeigt die Seitenansicht des Wagens nach Fig. 3.

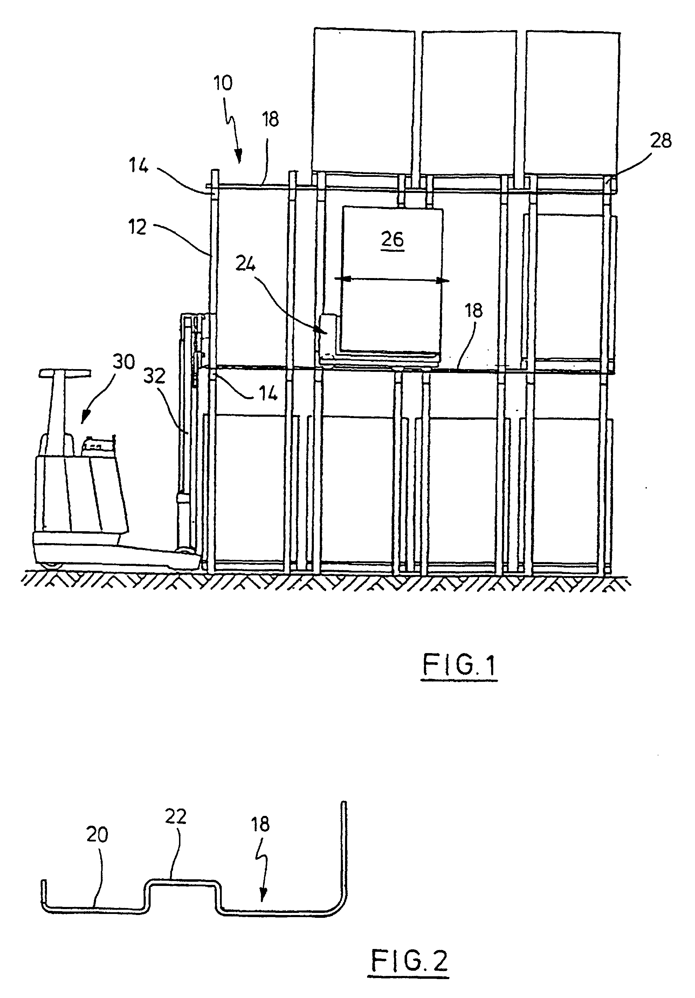

Man erkennt in Fig. 1 ein Regalsystem 10 in Form eines sogenannten Hochregals mit drei übereinander liegenden Ebenen. Das Hochregal weist einzelne Ständer 12 auf, die durch Querträger 14 miteinander verbunden sind. Dadurch ergibt sich in jeder Etage eine Reihe nebeneinander liegender Kanäle. In jedem Kanal ist ein Paar Schienen 18 angeordnet, von denen eine im Querschnitt in Fig. 2 dargestellt ist. Die Schienen 18 ruhen auf Querträgern 14. Sie weisen eine erste Lauffläche 20 auf, die durch ein erste U-Profil gebildet ist sowie eine zweite parallel daneben und höher liegende Lauffläche 22. Auf den Laufflächen 20, 22 fahren Rollen eines später noch zu beschreibenden Satellitenwagens 24, der in Fig. 1 damit "beschäftigt" ist, eine Palette mit einer Ladung 26 im entsprechenden Kanal zu befördern. Wie aus Fig. 1 hervorgeht, ist eine Reihe von Paletten 28 in den einzelnen Ebenen des Regalsystems 10 bereits abgestellt.

Im Gang neben dem Regal ist Platz für ein Stapelfahrzeug 30, das als herkömmliches Stapelfahrzeug, beispielsweise ein sogenannter Seitenschubstapler, ausgeführt sein kann. Er weist einen verschiebbaren Mast 32 auf, an dem ein nicht weiter dargestelltes Lasthilfsmittel in Form einer Gabel, höhenverstellbar und ggf. seitenverstellbar bewegbar ist, um eine Palette vom Boden anzuheben und auf ein gewünschtes Niveau zu bringen bzw. von einem gewünschten Niveau auf den Boden abzusenken.

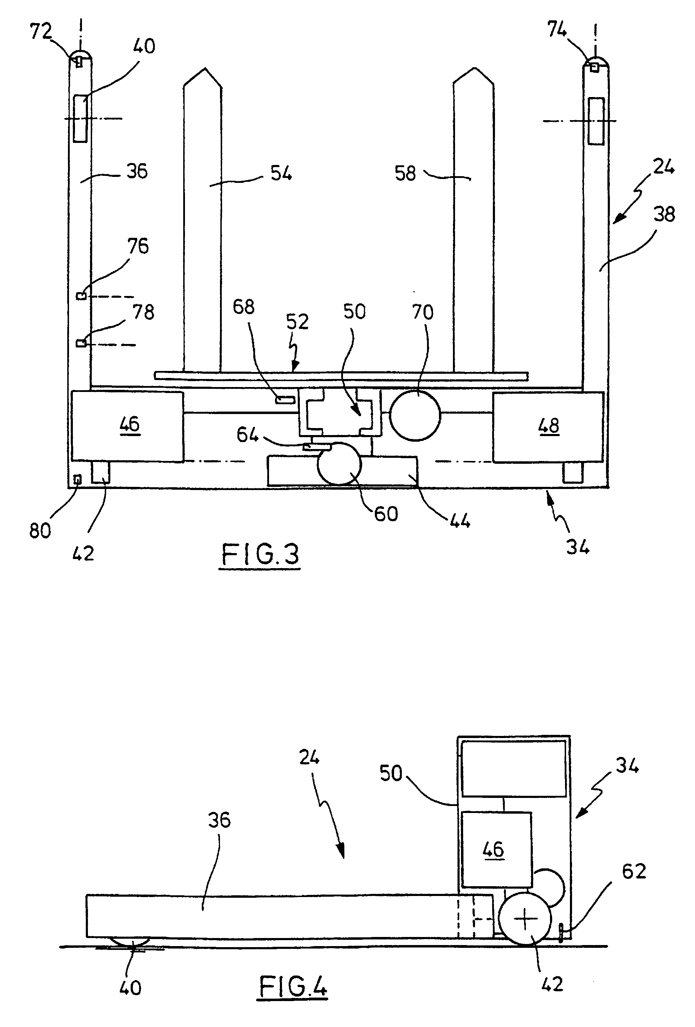

Der Wagen 24 hat gemäß den Figuren 3 und 4 einen Aufbau 34 und sich vom Aufbau fort erstreckende parallele Radarme 36, 38, die am vorderen Ende Laufräder 40 lagern. Diese laufen auf den Laufflächen 20 der Schienen 18. Im Aufbau 34 befinden sich ebenfalls zwei Laufräder 42, die jedoch eine engere Spur fahren und mithin auf der erhabenen Lauffläche 22 laufen. Letztere Räder werden von einem nicht weiter dargestellten elektromotorischem Antrieb 44 angetrieben. Zur Energieversorgung dienen zwei Batterien 46, 48, die an beiden Seiten des Aufbaus 34 angeordnet sind. Sie können durch geeignete Mittel einfach entnommen und durch andere ersetzt werden. Beim Einsetzen der Batterien 46, 48 findet automatisch eine Kontaktierung statt, so dass keine besonderen Maßnahmen getroffen werden müssen, diese mit dem Antrieb 44 in elektrische Verbindung zu schalten.

Im Aufbau 34 ist auch ein Maststummel 50 angeordnet in Form von zwei einander gegenüberliegender paralleler U-Profile. Diese führen in nicht weiter dargestellter Art und Weise einen Lastschlitten 52, an dem eine Gabel mit zwei Schenkeln 54, 58 angebracht ist, wie dies bei Hubwagen üblich ist. Bei 60 ist eine Kupplungsaufnahme am Aufbau 34 angedeutet. Sie dient zur Kopplung mit einem entsprechenden Kupplungsteil auf der nicht gezeigten Gabel des Stapelfahrzeugs 30. Somit kann der Wagen 24 fest mit der Gabel des Stapelfahrzeugs 30 verbunden werden, damit die Gabel des Wagens 24 mit Hilfe des Hubwerks des Stapelfahrzeugs eine Last aufnehmen kann. Der Wagen 34 ist mit mehreren Sensoren ausgerüstet, die mit einer nicht gezeigten Steuerung des Wagens 24 zusammenwirken. Die Steuerung ist eine sogenannte Ablaufsteuerung, welche bewirkt, dass der Wagen automatisch in dem Kanal, in den der Wagen eingesetzt ist, hin und her fahren kann zwecks Einlagerung oder Auslagerung einer Palette. Dies wird im Einzelnen später noch beschrieben.

Der Wagen 24 weist einen Sensor 62 auf, der im Aufbau 34 so angeordnet ist, dass er feststellen kann, wenn der Wagen 24 auf einer Schiene 18 abgesetzt ist. Ein Sensor 64 überprüft die Verriegelung der beschriebenen Kupplungseinrichtung 60 und ein weiterer nicht dargestellter Sensor überprüft, ob die Kupplung offen oder geschlossen ist. Eine andere Sensoranordnung 68 ermittelt, wenn der Lastschlitten 42 seine gewünschte angehobene und seine gewünschte abgesenkte Position erreicht hat, um über die Steuerung einen im Einzelnen nicht dargestellten Hubzylinder 70 für den Lastschlitten 52 anzusteuern. Sensoren 72, 74 am freien Ende der Lastarme 36, 38 stellen fest, wenn die Radarme sich einer Palette nähern bzw. einem Hindernis, das von den Sensoren erfasst werden kann. Ein Sensor 76 erfasst, wenn die Gabel des Lastschlittens 52 teilweise in eine Palette eingefahren ist. Ein Sensor 78 erfasst, wenn sich eine Palette vollständig auf der Gabel befindet. Ein weiterer Sensor (nicht gezeigt) ist dem Antrieb 44 zugeordnet, und ein Sensor misst die Entfernung zu dem Kanalanfang, von dem sich der Wagen fortbewegt.

Zwischen dem Stapelfahrzeug 30 und dem Wagen 24 kann eine Funkkommunikation bestehen, um einzelne Befehle und Zustände zu übertragen. Beispielsweise kann dadurch der Ladezustand der Batterien 46, 48 angezeigt werden. Außerdem kann das Schalten des Wagens 24 in dem Betriebsmodus durchgeführt werden. Ist dieser im Betriebsmodus geschaltet und mit dem Kupplungsteil der Lastgabel des Fahrzeugs 30 gekoppelt, wird automatisch die nicht im Einzelnen gezeigte Verriegelungsvorrichtung elektromagnetisch geschlossen, was mit Hilfe des Sensors 68 geschieht. Wird der Wagen 24 auf den Schienen 18 abgesetzt, wird der Sensor 62 aktiviert, und die Ablaufsteuerung löst die Verriegelung der Kupplung. Anschließend senkt der Fahrer des Fahrzeugs 30 die Lastgabel weiter ab, so dass sie von dem Wagen 24 frei ist. Hierbei öffnet der Sensor, der der Kupplungsaufnahme 60 zugeordnet ist und die Ablaufsteuerung weiß, dass die Kupplung getrennt ist. An dieser Stelle endet die Aktion des Stapelfahrzeugs 30 und es kann sich vom Regal entfernen und einer anderen Aufgabe zuwenden. Der Wagen 24 folgt jetzt der bereits beschriebenen in dem Steuerteil hinterlegten Ablaufsteuerung automatisch. Der Sensor 78 wird abgefragt, ob sich eine Palette auf dem Wagen 24 befindet. Wird eine Palette gemeldet, wird die Schaltfolge "Einlagerung" gestartet. Die Hubhydraulik wird eingeschaltet, bis der Sensor 68 für die vorgegebene Hubhöhe das Anheben der Gabel meldet. Ist dies der Fall, kann ein Befehl auf die Regelung für die Antriebsvorrichtung 44 gegeben werden, damit der Wagen 24 vorwärts gefahren wird. Außerdem werden die Sensoren 5 und 6 abgefragt. Während der Fahrt werden sie von den Sensoren vom Antrieb und vom Abstandssensor gespeichert. Mit anderen Worten, es wird redundant die Strecke gemessen, welche der Wagen 24 zurücklegt. Ggf. erfolgt ein Vergleich mit vorgegebenen Sollwerten. Entweder fährt der Wagen 24 vorwärts, bis der Sollwert erreicht ist oder der Sensor 74 eine im Kanal stehende Palette erkennt und die Schleichfahrt einleitet. Hat sich der Wagen 24 der Palette auf etwa 30 mm genähert, schaltet der Sensor 72, wodurch der Fahrantrieb gestoppt wird. Danach senkt die Hubhydraulik die Gabel des Wagens 24, bis der Absenkendpunkt erreicht wird, was durch die Sensoranordnung 68 festgestellt wird. Dadurch ist die Palette auf der Lauffläche 22 der Schiene 18 abgesetzt. Der Abstand der Laufflächen 22 der parallelen Schienen 18 hat nämlich eine Größe, welche annähernd der Breite der abzusetzenden Palette entspricht.

Anschließend kann die Rückfahrt des Wagens 24 eingeleitet werden. Die zurückgelegte Fahrstrecke wird mit dem Wert für die Vorwärtsfahrt verglichen. Zum Beispiel 250 mm vor dem Ende der zurückgelegten Strecke wird in Schleichgeschwindigkeit geschaltet und anschließend gestoppt. Nunmehr steht der Wagen 24 abholbereit am Anfang des Kanals.

Ist nach dem Absetzen des Wagens 24 der Sensor 78 nicht geschaltet gewesen, weil keine Palette aufgenommen ist, wird die Schaltfolge "Auslagerung" gestartet. Hierbei werden nicht die Sensoren 72, 74 abgefragt, sondern die Sensoren 76, 78. Da der Wagen 24 mit seinen Radarmen 36, 38 die Palette umfährt, wird die Schleichfahrt durch den Sensor 76 und der Stopp des Wagens durch den Sensor 78 bewerkstelligt. Alle weiteren Sensorabfragen sind mit denen für die Einlagerung identisch.

Aus Sicherheitsgründen sind am Anfang und am Ende jedes Kanals ein mechanischer Anschlag vorgesehen (nicht gezeigt), die verhindern, dass der Wagen 24 aufgrund einer Störung oder eines Messfehlers aus dem Regal fährt. Über die bereits beschriebene Funkkommunikation kann der Fahrer ein Notrückfahrtprogramm einleiten. Seine Gabel wird abgesenkt und der Wagen fährt ohne Last zum Kanalanfang zurück. Wird darauf verzichtet, in der Ablaufsteuerung die Kanaltiefe vorzugeben und steht keine Palette im Kanal, bewirken die Sensoren 72, 74 ein Stoppen des Antriebs mit Hilfe eines nicht näher dargestellten Reflexbleches am Ende des Kanals, um ein Herausfahren des Wagens 24 zu verhindern.

Die Sensoren 62 und 68 können induktiv arbeiten. Das Gleiche gilt für den Sensor für die Kupplungseinrichtung. Der Sensor 68 kann ein Berührungssensor sein.

Die Sensoren 78, 74, 72, 76 können durch Tastschalter gebildet sein. Der dem Antrieb zugeordnete Sensor kann ein Inkrementalgeber sein zur Messung der Fahrstrecke. Der Sensor 11 kann einen Laser enthalten zur Abstandsmessung.

## Patentansprüche

1. Lagersystem für Paletten, das ein Palettenregal (10) mit einem oder mehreren Wagen (24) sowie mindestens einem eine Gabel aufweisenden Stapelfahrzeug (3c) umfasst, wobei das Lagerregal aus Ständern aufgebaut ist, die untereinander durch Längs- und Querträger (12, 14) verbunden sind, wodurch in jedem Fach auf verschiedenen Trägerebenen Kanäle für die Palettenlagerung entstehen und wobei in der Längsrichtung eines jeden Kanals Fahrschienen (18) angebracht sind, auf denen ein Wagen in Längsrichtung durch den Kanal fahrbar ist, der mit Laufrollen und einem elektrischen Antrieb (44) dafür versehen ist, wobei der Wagen außerhalb der Palettenbreite Radarme (36, 38) aufweist, an einem Ende einen Aufbau aufweist, mit einer Gabel versehen ist zum Anheben und Absenken einer aufgenommenen Palette, **gekennzeichnet durch** folgende Merkmale:
- Der Wagen (24) weist eine verriegelbare Kupplungseinrichtung (60) zur lösbar verriegelten Festlegung des Wagens (24) an dem Gabelträger des Stapelfahrzeugs (30) auf
- Der Wagen (24) weist eine Batterie (46, 48) für den Antrieb (44) auf
- Der Wagen (24) weist eine autonome Programmablaufsteuerung zum automatischen Einlagern und Auslagern einer Palette in den bzw. aus dem Kanal, wobei die Ablaufsteuerung enthält:
einen ersten Sensor (62), der ein Signal abgibt, wenn der Wagen (24) auf den Fahrschienen (18) abgesetzt wird zur Initiierung der Ablaufsteuerung und Entriegelung der Kupplungseinrichtung (60)
einen zweiten Sensor (64), der den Zustand der Kupplungseinrichtung überwacht
einen dritten Sensor (78), der zum Start des Einlagerung- oder Auslagerungsvorgangs ein Signal abgibt, je nachdem, ob eine Palette sich auf der Gabel des Wagens (24) befindet
einen vierten Sensor (72), der ein Signal abgibt, wenn ein Radarm (36, 38) sich einer im Kanal befindlichen Palette annähert bzw. einem anderen Hindernis und
Mitteln, die bei Rückwärtsfahrt des Wagens (24) das Erreichen des Kanalanfangs feststellen.

2. System nach Anspruch 1, **dadurch gekennzeichnet, dass** ein fünfter Sensor vorgesehen ist, der die Verriegelungseinrichtung für die Kupplungseinrichtung (60) überwacht.

3. System nach Anspruch 1 oder 2, **dadurch gekennzeichnet, dass** ein sechster Sensor feststellt, wenn die Gabel des Wagens (24) eine vorgegebene Strecke in eine Palette eingefahren ist.

4. System nach einem der Ansprüche 1 bis 3, **dadurch gekennzeichnet, dass** ein siebter Sensor (74) vorgesehen ist, der feststellt, wenn sich ein Radarm (38) eine vorgegebene Strecke der Palette oder dem Hindernis genähert hat.

5. System nach einem der Ansprüche 1 bis 4, **dadurch gekennzeichnet, dass** ein achter und neunter Sensor (68) für die Hubendstellungen der Gabel vorgesehen sind.

6. System nach einem der Ansprüche 1 bis 5, **dadurch gekennzeichnet, dass** die Mittel eine Wegstreckenmessvorrichtung enthalten.

7. System nach Anspruch 6, **dadurch gekennzeichnet, dass** eine Messvorrichtung die Anzahl der Umdrehungen eines Rades des Wagens (24) misst.

8. System nach Anspruch 6, **dadurch gekennzeichnet, dass** eine Abstandsmessvorrichtung (80) vorgesehen ist, die den Abstand des Weges zum Kanalanfang misst.

9. System nach einem der Ansprüche 1 bis 8, **dadurch gekennzeichnet, dass** an den Kanalenden Hindernisse vorgesehen sind, die ein Abrollen des Wagens (24) verhindern.

10. System nach einem der Ansprüche 1 bis 9, **dadurch gekennzeichnet, dass** am Kanalende eine Fläche oder dergleichen vorgesehen ist, die vom vierten Sensor (72, 74) detektiert wird.

11. System nach einem der Ansprüche 1 bis 10, **dadurch gekennzeichnet, dass** eine kontaktlose Kommunikationsstrecke zwischen einem Fahrer oder dem Stapelfahrzeug (30) und dem Wagen (24) vorgesehen ist zur Übermittlung von Befehlen auf die Ablaufsteuerung und zur Anzeige von Betriebszuständen des Wagens (24).

## Claims

1. A storage system for pallets, comprising a pallet rack (10) with one or more carriages (24) and at least one lift truck (30) having a fork, wherein the storage rack is built from pillars which are interconnected by longitudinal and transverse girders (12, 14), which causes channels to be formed for pallet storage in each compartment on various girder planes, and wherein travelling rails (18) are mounted in the longitudinal direction of each channel on which a carriage which is provided with track rollers and an electric drive (44) therefor can be longitudinally run through the channel, wherein the carriage has wheel arms (36, 38) outside the pallet width, has an attachment structure at one end, and is provided with a fork for lifting and lowering a pallet picked up, **characterized by** the following features:
- The carriage (24) has a lockable coupling mechanism (60) to locate the carriage (24) on the fork carrier of the lift truck (30) in a releasably lockable manner.
- The carriage (24) has a battery (46, 48) for its drive (44).
- The carriage (24) has an autonomous executive control program to automatically store a pallet in and remove from the channel, the executive control program comprising:
a first sensor (62) which emits a signal when the carriage (249 is placed onto the travelling rails (18) to initiate the executive control program and unlock the coupling mechanism (60),
a second sensor (64) which monitors the condition of the coupling mechanism,
a third sensor (78) which emits a signal at the beginning of the storage or removal procedure, depending on whether a pallet is on the fork of the carriage (24),
a fourth sensor (72) which emits a signal when a wheel arm (36, 38) approaches a pallet located in the channel or approaches another obstacle, and Means which determine that the beginning of the channel is reached during a return travel of the carriage (24).

2. The system as claimed in claim 1, **characterized in that** a fifth sensor is provided which monitors the locking device for the coupling mechanism (60).

3. The system as claimed in claim 1 or 2, **characterized in that** a sixth sensor determines that the fork of the carriage (24) has moved into a pallet by a predetermined length of travel.

4. The system as claimed in any one of claims 1 to 3, **characterized in that** a seventh sensor (74) is provided which determines that a wheel arm (38) has approached the pallet or obstacle by a predetermined length of travel.

5. The system as claimed in any one of claims 1 to 4, **characterized in that** an eighth and a ninth sensor (68) are provided for the stroke end positions of the fork.

6. The system as claimed in any one of claims 1 to 5, **characterized in that** the means include a travel length measuring device.

7. The system as claimed in claim 6, **characterized in that** a measuring device measures the number of revolutions of a wheel of the carriage (24).

8. The system as claimed in claim 6, **characterized in that** a distance measuring device (80) is provided which measures the distance of the path from the beginning of the channel.

9. The system as claimed in any one of claims 1 to 8, **characterized in that** obstacles are provided at the ends of the channel to prevent the carriage (24) from rolling out.

10. The system as claimed in any one of claims 1 to 9, **characterized in that** a surface or the like which is detected by the fourth sensor (72, 74) is provided at the end of the channel.

11. The system as claimed in any one of claims 1 to 10, **characterized in that** a non-contacting communication line is provided between a driver or fork truck (30) and the carriage (24) to transmit instructions to the executive control program and signal operating conditions of the carriage (24).

## Revendications

1. Système de stockage pour palettes, qui comprend un rayonnage à palettes (10) avec un ou plusieurs chariots (24) ainsi qu'au moins un chariot élévateur (30) présentant une fourche, dans lequel le rayonnage de stockage est constitué par des colonnes qui sont reliées entre elles par des longerons et des traverses (12, 14), formant ainsi dans chaque case aux différents plans de support des canaux pour le stockage de palettes et dans lequel des rails de roulement (18) sont installés dans le sens longitudinal de chaque canal, sur lesquels peut se déplacer dans le sens longitudinal à travers chaque canal un chariot, qui est pourvu à cet effet de galets de roulement et d'un moteur électrique (44), dans lequel le chariot présente des bras roulants (36, 38) à l'extérieur de la largeur de la palette, présente une superstructure à une extrémité, est pourvu d'une fourche pour lever et abaisser une palette déposée, **caractérisé par** les caractéristiques suivantes:
- le chariot (24) présente un dispositif de couplage (60) verrouillable pour la fixation verrouillée de façon détachable du chariot (24) au support de fourche du chariot élévateur (30),
- le chariot (24) présente une batterie (46, 48) pour l'entraînement (44),
- le chariot (24) présente une commande d'exécution programmable autonome pour le dépôt et la reprise automatiques d'une palette dans ou hors du canal, la commande d'exécution programmable comprenant:
un premier détecteur (62), qui émet un signal lorsque le chariot (24) est déposé sur les rails de roulement (18) pour lancer la commande d'exécution et déverrouiller le dispositif de couplage (60),
un deuxième détecteur (64), qui surveille l'état du dispositif de couplage,
un troisième détecteur (78), qui émet un signal pour le démarrage de l'opération de dépôt ou de reprise, selon qu'il se trouve ou non une palette sur la fourche du chariot (24),
un quatrième détecteur (72), qui émet un signal lorsqu'un bras roulant (36, 38) s'approche d'une palette se trouvant dans un canal, ou d'un autre obstacle, et
des moyens qui constatent que le début du canal est atteint lors d'une course de retour du chariot (24).

2. Système selon la revendication 1, **caractérisé en ce qu'**il est prévu un cinquième détecteur, qui surveille le dispositif de verrouillage du dispositif de couplage (60).

3. Système selon la revendication 1 ou 2, **caractérisé en ce qu'**un sixième détecteur détermine quand la fourche du chariot (24) s'est engagée d'une longueur prédéterminée dans une palette.

4. Système selon l'une quelconque des revendications 1 à 3, **caractérisé en ce qu'**il est prévu un septième détecteur (74), qui détermine quand un bras roulant (38) s'est approché à une distance prédéterminée de la palette ou de l'obstacle.

5. Système selon l'une quelconque des revendications 1 à 4, **caractérisé en ce qu'**il est prévu un huitième et un neuvième détecteurs (68) pour les positions finales de levage de la fourche.

6. Système selon l'une quelconque des revendications 1 à 5, **caractérisé en ce que** les moyens comprennent un dispositif de mesure du chemin parcouru.

7. Système selon la revendication 6, **caractérisé en ce qu'**un dispositif de mesure compte le nombre de tours d'une roue du chariot (24).

8. Système selon la revendication 6, **caractérisé en ce qu'**il est prévu un dispositif de mesure de distance (80), qui mesure la distance du chemin jusqu'au début du canal.

9. Système selon l'une quelconque des revendications 1 à 8, **caractérisé en ce qu'**il est prévu aux extrémités du canal des obstacles, qui empêchent une chute du chariot (24).

10. Système selon l'une quelconque des revendications 1 à 9, **caractérisé en ce qu'**il est prévu à l'extrémité du canal une surface ou analogue, qui est détectée par le quatrième détecteur (72, 74).

11. Système selon l'une quelconque des revendications 1 à 10, **caractérisé en ce qu'**il est prévu une zone de communication sans contact entre un conducteur ou le chariot élévateur (30) et le chariot (24), pour la transmission d'ordres à la commande d'exécution, et pour l'affichage des états de marche du chariot (24).
